(19) Europäisches Patentamt
European Patent Office
Office européen des brevets

(11) EP 0 829 518 A1

(12) EUROPÄISCHE PATENTANMELDUNG

(43) Veröffentlichungstag: **18.03.1998 Patentblatt 1998/12**

(51) Int. Cl.[6]: **C08L 83/07**, C09D 183/07, C08G 77/50

(21) Anmeldenummer: **97115805.0**

(22) Anmeldetag: **11.09.1997**

(84) Benannte Vertragsstaaten:
**AT BE CH DE DK ES FI FR GB GR IE IT LI LU MC NL PT SE**

(30) Priorität: **12.09.1996 DE 19637158**

(71) Anmelder: **Wacker-Chemie GmbH
81737 München (DE)**

(72) Erfinder:
- **Feichten, Christian Herzig, Dr.
83329 Waging am See (DE)**
- **Rieger, Elfriede
84359 Simbach am Inn (DE)**

(74) Vertreter:
**Deffner-Lehner, Maria, Dr. et al
Wacker-Chemie GmbH,
Zentralabteilung PLM,
Hanns-Seidel-Platz 4
81737 München (DE)**

# (54) Si-gebundene Wasserstoffatome aufweisende Organosilicium-Verbindungen in vernetzbaren Zusammensetzungen

(57) Beschrieben werden neue vernetzbare Zusammensetzungen enthaltend

(A) Organosiliciumverbindungen, die Reste mit aliphatischen Kohlenstoff-Kohlenstoff-Mehrfachbindungen aufweisen
(B) Si-gebundene Wasserstoffatome aufweisende Organosiliciumverbindungen
(C) die Anlagerung von Si-gebundenem Wasserstoff an aliphatische Mehrfachbindung fördernde Katalysatoren und gegebenenfalls
(D) die Anlagerung von Si-gebundenem Wasserstoff an aliphatische Mehrfachbindung bei Raumtemperatur verzögernde Mittel,

dadurch gekennzeichnet, daß als (B) Si-gebundene Wasserstoffatome aufweisenden Organosiliciumverbindungen solche enthaltend

(a) durchschnittlich je Molekül mindestens eine Struktureinheit der allgemeinen Formel

$$-Z-SiR_x(OSiR_{3-a}H_a)_{3-x} \qquad (I),$$

wobei R gleich oder verschiedenen ist und einen einwertigen, von aliphatischen Mehrfachbindungen freien, gegebenenfalls halogenierten Kohlenwasserstoffrest mit 1 bis 8 Kohlenstoffatomen je Rest bedeutet,
Z einen zweiwertigen aliphatischen Kohlenwasserstoffrest mit 2 bis 12 Kohlenstoffatomen je Rest bedeutet,
a 1, 2 oder 3 und
x 0 oder 1 ist.

verwendet werden.

EP 0 829 518 A1

## Beschreibung

Die Erfindung betrifft vernetzbare Zusammensetzungen enthaltend

(A) Organosiliciumverbindungen, die Reste mit aliphatischen Kohlenstoff-Kohlenstoff-Mehrfachbindungen aufweisen,
(B) Si-gebundene Wasserstoffatome aufweisende Organosiliciumverbindungen,
(C) die Anlagerung von Si-gebundenen Wasserstoff an aliphatische Mehrfachbindung fördernde Katalysatoren und gegebenenfalls
(D) die Anlagerung von Si-gebundenem Wasserstoff an aliphatische Mehrfachbindung bei Raumtemperatur verzögernde Mittel

sowie die Verwendung der vernetzbaren Zusammensetzungen zur Herstellung von klebrige Stoffe abweisenden Überzügen. Weiterhin betrifft die Erfindung Si-gebundene Wasserstoffatome aufweisende Organosiliciumverbindungen sowie ein Verfahren zu deren Herstellung.

Als Vernetzer für aliphatisch ungesättigte Organopolysiloxane werden nahezu ausschließlich Organopolysiloxane mit Hydrogenmethylsiloxaneinheiten verwendet, im einfachsten Fall mit Triorganosiloxygruppen endblockiertes Hydrogenmethylpolysiloxan. Zur Steigerung der Reaktivität hat es sich bewährt zwischen die Hydrogenmethylsiloxaneinheiten durch Equilibrieren Dimethylsiloxaneinheiten einzubauen. Diese Maßnahmen sind jedoch nur sehr begrenzte Verbesserungen.

Außer diesen auf Hydrogenmethylsiloxaneinheiten basierenden Vernetzern sind auch solche ohne Methylgruppen bekannt. In DE-B 1 955 511 bzw. der korrespondierenden US-A 3,615,272 sind Harze aus Hydrogensiloxaneinheiten, also trifunktionellen Einheiten beschrieben. Zur Verwendung in additionshärtenden Organopolysiloxanzusammensetzungen als Vernetzer sind solche Polymere allerdings nur von sehr eingeschränktem Nutzen, da sie sich kaum in den vernetzbaren Diorganopolysiloxanen lösen.

Aus EP-A 568 318 sind Organopolysiloxane mit trifunktionellen Siloxaneinheiten und monofunktionellen Siloxaneinheiten mit Si-gebundenem Wasserstoff bekannt. Gemäß der EP-A 568 318 werden T-Einheiten in Form von Organosiloxaneinheiten mit Hydrogendimethylsiloxygruppen endgestoppert, wobei zwischen diesen Gruppen eine unterschiedliche Anzahl von Dimethylsiloxan- oder Hydrogenmethylsiloxaneinheiten eingebaut sein kann.

Gemäß DE-A 37 16 372 werden Organopolysiloxane mit Si-gebundenen Wasserstoffatomen und 3 bis 5 Siliciumatomen je Molekül aus $[H(CH_3)_2Si]_2O$ und Trialkoxysilanen in einem hydrolytischen Verfahren hergestellt.

Aus Polym. Prepr. Vol. 34(2), 538 (1993) ist bekannt, daß die Eigencyclisierung von Allyltris(dimethylsiloxy)silan dominant ist, wenn diese Verbindung in Verdünnung unter Platinkatalyse reagiert.

In Polym. Prepr. Vol. 34(2), 503 (1993) wird ebenfalls die Eigencyclisierung beschrieben. Zu deren Vermeidung wird versucht, längere Alkenylgruppen in die monomere Verbindung der Formel $AlkenylSi(R_2SiH)_3$ einzubauen. Isomerisierung der ω-Alkenyldoppelbindung in eine interne Position zu 15 bis 16 Mol-% findet bei der Synthese der monomeren Verbindung statt, wodurch dieser Prozentsatz unreaktiv bleibt. Zudem werden die Si-H-Gruppen aufgrund des höheren Gewichtes von $C_6H_{11}$- bzw. $C_8H_{15}$-Gruppen weiter "verdünnt". Die Endprodukte sind instabil, da die Si-H-Gruppen zur Vermeidung von Gelbildung geschützt werden müssen.

Gemäß Chemical Abstract, Vol. 122, 56637, 1995 wird Vinyltris(dimethylsiloxy)silan in einem aufwendigen Verfahren hergestellt, in welchem das sehr flüchtige Dimethylchlorsilan und der leicht entzündliche Diethylether benötigt wird. Zur Aufarbeitung sind außerdem Hilfsbasen nötig. Bei der Polymerisation unter verschiedenen Bedingungen entstehen Selbstpolymerisate mit durchschnittlichen Molekulargewichten von 5 200 bis 53 000 g/mol. Es entstehen zwar kaum Cyclen, doch ist die Polymerisation nur schwer kontrollierbar, da das Silan stark exotherm reagiert, sobald der Platinkatalysator zugegebenen wird. Die Verwendung als Vernetzer wird nicht beschrieben.

Aus US-A 5,097,054 ist ein Verfahren zur Herstellung von Verbindungen der Formel $R_{4-n}Si(OSiMe_2H)_n$ beschrieben, wobei für Reste R nur aliphatisch gesättigte Reste und keine aliphatisch ungesättigten Reste beschrieben sind.

Es bestand die Aufgabe, Si-gebundene Wasserstoffatome aufweisende Organosiliciumverbindungen bereitzustellen, die in einem Verfahren hergestellt werden mit dem auf einfache Weise die Anzahl der Si-gebundenen Wasserstoffatome je Molekül erhöht wird, und die mit Organosiliciumverbindungen, die Reste mit aliphatischen Kohlenstoff-Kohlenstoff-Mehrfachbindungen aufweisen, in Gegenwart von die Anlagerung von Si-gebundenem Wasserstoff an aliphatische Mehrfachbindung fördernden Katalysatoren rasch vernetzen, wobei höhere Vernetzungsgeschwindigkeiten als bisher erzielt werden. Weiterhin bestand die Aufgabe, vernetzbare Zusammensetzungen bereitzustellen, die zur Herstellung von klebrige Stoffe abweisenden Überzügen geeignet sind. Die Aufgabe wird durch die Erfindung gelöst.

Gegenstand der Erfindung sind vernetzbare Zusammensetzungen enthaltend

(A) Organosiliciumverbindungen, die Reste mit aliphatischen Kohlenstoff-Kohlenstoff-Mehrfachbindungen aufweisen

(B) Si-gebundene Wasserstoffatome aufweisende Organosiliciumverbindungen

(C) die Anlagerung von Si-gebundenem Wasserstoff an aliphatische Mehrfachbindung fördernde Katalysatoren und gegebenenfalls

(D) die Anlagerung von Si-gebundenem Wasserstoff an aliphatische Mehrfachbindung bei Raumtemperatur verzögernde Mittel,

dadurch gekennzeichnet, daß als (B) Si-gebundene Wasserstoffatome aufweisende Organosiliciumverbindungen solche enthaltend

(a) durchschnittlich je Molekül mindestens eine Struktureinheit, vorzugsweise mindestens zwei Struktureinheiten, der allgemeinen Formel

$$-Z-SiR_x(OSiR_{3-a}H_a)_{3-x} \qquad (I),$$

wobei R gleich oder verschiedenen ist und einen einwertigen, von aliphatischen Mehrfachbindungen freien, gegebenenfalls halogenierten Kohlenwasserstoffrest mit 1 bis 8 Kohlenstoffatomen je Rest bedeutet,
Z einen zweiwertigen aliphatischen Kohlenwasserstoffrest mit 2 bis 12 Kohlenstoffatomen je Rest bedeutet,
a 1, 2 oder 3, bevorzugt 1 oder 2, besonders bevorzugt 1 ist und x 0 oder 1, bevorzugt 0 ist.

verwendet werden.

Vorzugsweise werden als Si-gebundene Wasserstoffatome aufweisende Organosiliciumverbindungen (B) solche enthaltend

(a) durchschnittlich je Molekül mindestens eine Struktureinheit, vorzugsweise mindestens zwei Struktureinheiten, der allgemeinen Formel

$$O_{\frac{3-y}{2}}R_ySi-Z-SiR_x(OSiR_{3-a}H_a)_{3-x} \qquad (I'),$$

wobei R gleich oder verschiedenen ist und einen einwertigen, von aliphatischen Mehrfachbindungen freien, gegebenenfalls halogenierten Kohlenwasserstoffrest mit 1 bis 8 Kohlenstoffatomen je Rest bedeutet,
Z einen zweiwertigen aliphatischen Kohlenwasserstoffrest mit 2 bis 12 Kohlenstoffatomen je Rest bedeutet,
a 1, 2 oder 3, bevorzugt 1 oder 2, besonders bevorzugt 1 ist,
x 0 oder 1, bevorzugt 0 ist und
y 0, 1 oder 2, bevorzugt 1 oder 2, besonders bevorzugt 2 ist,

und gegebenenfalls
(b) Einheiten der allgemeinen Formel

$$O_{\frac{3-y}{2}}R_ySiH \qquad (II),$$

wobei R und y die oben dafür angegebene Bedeutung haben,

bei den erfindungsgemäßen Zusammensetzungen eingesetzt.

Die erfindungsgemäßen (B) Si-gebundene Wasserstoffatome aufweisenden Organosiliciumverbindungen können weiterhin
(c) Einheiten der allgemeinen Formel

$$R_dSiO_{\frac{4-d}{2}} \qquad (III),$$

wobei R die oben dafür angegebene Bedeutung hat,
und d 1, 2 oder 3, bevorzugt 1 und 3 ist,

enthalten.

Die erfindungsgemäßen (B) Si-gebundene Wasserstoffatome aufweisende Organosiliciumverbindungen können weiterhin

(d) Carbostruktureinheiten G

wobei G gleich oder verschieden ist und einen zweiwertigen bis zehnwertigen Kohlenwasserstoffrest mit 2 bis 30 Kohlenstoffatomen je Rest bedeutet, der ein oder mehrere Heteroatome ausgewählt aus der Gruppe von Sauerstoff, Bor, Silicium, Zinn oder Titan enthalten kann,
mit der Maßgabe, daß über G mindestens zwei Si-Atome miteinander verbunden sind,

und

(e) Einheiten der allgemeinen Formel

$$-R_bSiO_{\frac{3-b}{2}} \qquad (IV)$$

und/oder

$$-R_bSiO_{\frac{2-b}{2}}- \qquad (IV'),$$

wobei R die oben dafür angegebene Bedeutung hat,
und b 0, 1 oder 2, bevorzugt 0 ist, mit der Maßgabe, daß b in der Formel (IV´) nicht 2 ist, und
mit der Maßgabe, daß die Einheiten der Formel (IV) bzw. (IV') über die Si-Atome mit den Carbostruktureinheiten G verbunden sind

enthalten.

Gegenstand der Erfindung sind weiterhin vernetzbare Zusammensetzungen, dadurch gekennzeichnet, daß als (B) Si-gebundene Wasserstoffatome aufweisende Organosiliciumverbindung solche verwendet werden, herstellbar indem
Siloxane (1) der allgemeinen Formel

$$R^1SiR_x(OSiR_{3-a}H_a)_{3-x}$$

wobei $R^1$ einen einwertigen aliphatischen Kohlenwasserstoffrest mit einer endständigen aliphatischen Doppelbindung mit 2 bis 12 Kohlenstoffatomen je Rest und
R, a und x die oben dafür angegebene Bedeutung haben, mit Organosiliciumverbindungen (2), die durchschnittlich je Molekül mindestens ein Si-gebundenes Wasserstoffatom enthalten,
in Gegenwart von die Anlagerung von Si-gebundenem Wasserstoff an aliphatische Mehrfachbindung fördernde Katalysatoren (3) umgesetzt werden,
wobei das eingesetzte Verhältnis von Si-gebundenem Wasserstoff in Organosiliciumverbindung (2) zu aliphatischer Doppelbindung in Siloxan (1) 1 : 0,1 bis 1 : 20 beträgt.

Vorzugsweise werden als Organosiliciumverbindungen (2) solche enthaltend
(b) durchschnittlich je Molekül mindestens eine Einheit der allgemeinen Formel

$$O_{\frac{3-y}{2}}R_ySiH \qquad (II),$$

wobei R und y die oben dafür angegebene Bedeutung haben.

eingesetzt.

Die Organosiliciumverbindungen (2) können weiterhin

(c) Einheiten der allgemeinen Formel

$$R_dSiO_{\frac{4-d}{2}} \qquad \text{(III)},$$

wobei R und d die oben dafür angegebene Bedeutung haben,

enthalten.

Die Organosiliciumverbindungen (2) können weiterhin

(d) Carbostruktureinheiten G

wobei G die oben dafür angegebene Bedeutung hat,
mit der Maßgabe, daß über G mindestens zwei Si-Atome miteinander verbunden sind,

und

(e) Einheiten der allgemeinen Formel

$$R_bSiO_{\frac{3-b}{2}} \qquad \text{(IV)}$$

und/oder

$$R_bSiO_{\frac{2-b}{2}} \qquad \text{(IV')},$$

wobei R und b die oben dafür angegebene Bedeutung haben, mit der Maßgabe, daß die Einheiten der Formel (IV) bzw. (IV') über die Si-Atome mit den Carbostruktureinheiten G verbunden sind

enthalten.

Gegenstand der Erfindung sind weiterhin Si-gebundene Wasserstoffatome aufweisende Organosiliciumverbindungen (B) enthaltend

(a) durchschnittlich je Molekül mindestens eine Struktureinheit, vorzugsweise mindestens zwei Struktureinheiten, der allgemeinen Formel

$$-Z-SiR_x(OSiR_{3-a}H_a)_{3-x} \qquad \text{(I)},$$

wobei R, Z, a und x die oben dafür angegebene Bedeutung haben.

Si-gebundene Wasserstoffatome aufweisende Organosiliciumverbindungen sind vorzugsweise solche enthaltend

(a) durchschnittlich je Molekül mindestens eine Struktureinheit, vorzugsweise mindestens zwei Struktureinheiten, der allgemeinen Formel

$$O_{\frac{3-y}{2}}R_ySi-Z-SiR_x(OSiR_{3-a}H_a)_{3-x} \quad (I'),$$

wobei R, Z, a, x und y die oben dafür angegebene Bedeutung haben,

und gegebenenfalls

(b) Einheiten der allgemeinen Formel

$$O_{\frac{3-y}{2}}R_ySiH \quad (II),$$

wobei R und y die oben dafür angegebene Bedeutung haben.

Gegenstand der Erfindung ist weiterhin ein Verfahren zur Herstellung der erfindungsgemäßen Si-gebundene Wasserstoffatome aufweisenden Organosiliciumverbindungen (B), dadurch gekennzeichnet, daß Siloxane (1) der allgemeinen Formel

$$R^1SiR_x(OSiR_{3-a}H_a)_{3-x}$$

wobei R, $R^1$, a und x die oben dafür angegebene Bedeutung haben,
mit Organosiliciumverbindungen (2), die durchschnittlich je Molekül mindestens ein Si-gebundenes Wasserstoffatom enthalten,
in Gegenwart von die Anlagerung von Si-gebundenem Wasserstoff an aliphatische Mehrfachbindung fördernde Katalysatoren (3) umgesetzt werden,
wobei das eingesetzte Verhältnis von Si-gebundenem Wasserstoff in Organosiliciumverbindung (2) zu aliphatischer Doppelbindung in Siloxan (1) 1 : 0,1 bis 1 : 20 beträgt.

Bei dem erfindungsgemäßen verfahren werden vorzugsweise solche Organosiliciumverbindungen (2) eingesetzt enthaltend
(b) durchschnittlich je Molekül mindestens eine Einheit der allgemeinen Formel

$$O_{\frac{3-y}{2}}R_ySiH \quad (II),$$

wobei R und y die oben dafür angegebene Bedeutung haben.

Gegenstand der Erfindung ist weiterhin ein Verfahren zur Herstellung der Siloxane (1) der allgemeinen Formel

$$R^1SiR_x(OSiR_{3-a}H_a)_{3-x},$$

wobei R, $R^1$, a und x die oben dafür angegebene Bedeutung haben,
durch Umsetzung von Silanen (4) der allgemeinen Formel

$$R^1R_xSiY_{3-x}$$

mit Disiloxanen (5) der allgemeinen Formel

$$(H_aR_{3-a}Si)_2O$$

wobei Y gleich oder verschieden sein kann, ein Halogenatom oder ein Rest der Formel $-OR^2$ ist, wobei $R^2$ einen Alkylrest mit 1 bis 8 Kohlenstoffatomen je Rest, der durch ein Ethersauerstoffatom substituiert sein kann, bedeutet, und R, $R^1$, a und x die oben dafür angegebene Bedeutung haben, und Wasser in Gegenwart von die Hydrolyse fördernde Katalysatoren (6),
wobei das eingesetzte Verhältnis von Si-Atomen in Disiloxan (5) zu hydrolysefähigen Gruppen Y in Silan (4) 0,8 bis

5,0 beträgt.

Die erfindungsgemäßen, Si-gebundene Wasserstoffatome aufweisenden Organosiliciumverbindungen (B) besitzen vorzugsweise eine Viskosität von 5 bis 200 $mm^2 \cdot s^{-1}$ bei 25°C, bevorzugt 10 bis 160 $mm^2 \cdot s^{-1}$ bei 25°C, und besonders bevorzugt 25 bis 160 $mm^2 \cdot s^{-1}$ bei 25°C.

Die erfindungsgemäßen, Si-gebundene Wasserstoffatome aufweisenden Organosiliciumverbindungen (B) enthalten durchschnittlich je Molekül vorzugsweise mindestens 5 Si-gebundene Wasserstoffatome, bevorzugt 5 bis 50 Si-gebundene Wasserstoffatome, insbesondere 10 bis 50 Si-gebundene Wasserstoffatome, besonders bevorzugt 15 bis 40 Si-gebundene Wasserstoffatome.

Die erfindungsgemäßen, Si-gebundene Wasserstoffatome aufweisenden Organosiliciumverbindungen (B) enthalten durchschnittlich je Molekül vorzugsweise mindestens 2 Struktureinheiten der Formel (I), bevorzugt mindestens 4 Struktureinheiten der Formel (I).

Beim erfindungsgemäßen Verfahren zur Herstellung der Organosiliciumverbindungen (B) findet überraschenderweise nur in sehr geringem Ausmaße eine Selbstaddition der Siloxane (1) zu cyclischen Produkten statt. Bevorzugt findet eine Addition der Siloxane (1) an die Organosiliciumverbindung (2) statt, was zu einer Erhöhung der Anzahl der Si-gebundenen Wasserstoffatome je Molekül führt. Pro addiertem Molekül Siloxan (1) wird zwar eine Si-H-Gruppe zur Addition an $R^1$ verbraucht, dafür aber mindestens zwei, bevorzugt mindestens drei neue Si-H-Gruppen eingeführt. Effektiv führt das durchschnittlich zu einer Erhöhung des Molekulargewichtes und zu einer Erhöhung der Anzahl reaktiver Si-H-Gruppen je Molekül. Die erfindungsgemäßen Zusammensetzungen weisen außerdem eine gute Substrathaftung auf.

Der Rest R in den Si-gebundenen Wasserstoffatomen aufweisenden Organosiliciumverbindungen (B) ist frei von aliphatischen Mehrfachbindungen, damit es zu keiner Eigenvernetzung kommt, die zu Unlöslichkeiten führen.

Beispiele für Reste R sind Alkylreste, wie der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Cycloalkylreste, wie Cyclopentyl-, Cyclohexyl-, Cycloheptylreste und Methylcyclohexylreste; Arylreste, wie der Phenylrest; Alkarylreste, wie o-, m-, p-Tolylreste, Xylylreste und Ethylphenylreste und Aralkylreste, wie der Benzylrest, der $\alpha$- und der $\beta$-Phenylethylrest. Bevorzugt ist der Methylrest.

Beispiele für halogenierte Reste R sind Halogenalkylreste, wie der 3,3,3-Trifluor-n-propylrest, der 2,2,2,2',2',2'-Hexafluorisopropylrest, der Heptafluorisopropylrest und Halogenarylreste, wie der o-, m-, und p-Chlorphenylrest.

Beispiele für Reste $R^1$ sind Alkenylreste, wie der Vinyl-, Allyl-, 5-Hexenyl-, 7-Octenyl-, und 9-Decenylrest, wobei der Vinylrest bevorzugt ist.

Beispiele für Alkylreste $R^2$ sind der Methyl-, Ethyl-, n- Propyl-, iso-Propyl-, 1-n-Butyl-, 2-n-Butyl-, iso-Butyl-, und tert.-Butylrest. Bevorzugt sind der Methyl- und Ethylrest. Beispiele für Alkylreste $R^2$, die durch ein Ethersauerstoffatom substituiert sind, sind der Methoxyethyl- und Ethoxyethylrest.

Ein bevorzugtes Beispiel für das Halogenatom Y ist das Chloratom.

Vorzugsweise ist der Rest Z ein zweiwertiger, aliphatisch gesättigter Kohlenwasserstoffrest mit 2 bis 8 Kohlenstoffatomen je Rest.

Beispiele für Reste Z sind solche der Formel $-CH_2CH_2-$, $-CH_2CH_2CH_2-$, $-(CH_2)_6-$, $-(CH_2)_8-$ und $-(CH_2)_{10}-$, wobei $-CH_2CH_2-$ bevorzugt ist.

Ein besonders bevorzugtes Beispiel für die Struktureinheit der Formel (I´) ist solche der Formel

$$O_{1/2}Me_2Si\text{-}CH_2CH_2\text{-}Si(OSiMe_2H)_3$$

(Me = Methylrest).

Ein besonders bevorzugtes Beispiel für die Einheit der Formel (II) ist solche der Formel $O_{1/2}Me_2SiH$ (Me = Methylrest).

Vorzugsweise ist die Carbostruktureinheit G ein zwei- bis zehnwertiger aliphatisch gesättigter Kohlenwasserstoffrest, bevorzugt ein drei- bis zehnwertiger aliphatisch gesättigter Kohlenwasserstoffrest.

Als Carbostruktureinheit G werden besonders bevorzugt Reste der allgemeinen Formel

$$R^4(CR^3H\text{-}CH_2\text{-})_x$$

wobei $R^4$ einen zweiwertigen bis zehnwertigen aliphatisch gesättigten Kohlenwasserstoffrest mit 1 bis 10 Kohlenstoffatomen, der ein oder mehrere Heteroatome ausgewählt aus der Gruppe von Sauerstoff, Bor, Silicium, Zinn und Titan enthalten kann,

$R^3$ ein Wasserstoffatom oder einen Alkylrest mit 1 bis 6 Kohlenstoffatomen je Rest und

x 2, 3, 4, 5, 6, 7, 8, 9 oder 10, insbesondere 3, 4, 5 und 6, besonders bevorzugt 3, bedeutet,

eingesetzt.

Beispiele für Alkylreste $R^3$ sind der Methyl-, Ethyl-, n-Propyl-, iso-Propyl-, 1-n-Butyl-, 2-n-Butyl-, iso-Butyl-, tert.-Butyl-, n-Pentyl-, iso-Pentyl-, neo-Pentyl, tert.-Pentylrest und Hexylreste, wie der n-Hexylrest. Bevorzugt ist $R^3$, ein Wasserstoffatom.

Beispiele für zweiwertige Carbostruktureinheiten G sind solche der Formel

$$-CH_2CH_2-$$

$$-CH_2CH_2CH_2CH_2-$$

$$-(CH_2)_6-$$

$$-(CH_2)_{10}-$$

$$-(CH_2)_3O(CH_2)_3-$$

$$-CH_2CH_2-C_6H_4-CH_2CH_2- \text{ und}$$

$$-CH_2CH_2Si(CH_3)_2CH_2CH_2-.$$

Beispiele für dreiwertige Carbostruktureinheiten G sind solche der Formel

$$(-CH_2CH_2)_3C_6H_9$$

$$(-CH_2CH_2)_3C_6H_3$$

$$(-CH_2CH_2CH_2OCH_2)_3C-CH_2CH_3$$

$$(-CH_2CH_2CH_2)_3B$$

$$(-CH_2CH_2)_3SiCH_3 \text{ und}$$

$$(-CH_2CH_2)_3SnC_4H_9.$$

Beispiele für vierwertige Carbostruktureinheiten G sind solche der Formel

$$(-CH_2CH_2)_4C_4H_4$$

$$(-CH_2CH_2)_4Sn$$

$$(-CH_2CH_2)_4Ti$$

$$(-CH_2CH_2CH_2O)_2CH-CH(OCH_2CH_2CH_2-)_2 \text{ und}$$

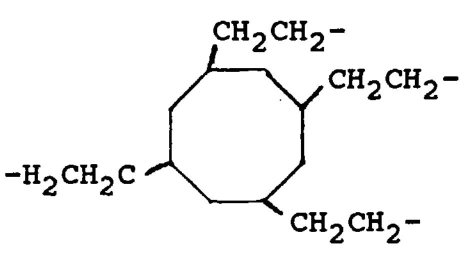

Höherwertige Carbostruktureinheiten G können solche der Formel

$$(-CH_2CH_2)_3SiCH_2CH_2Si(CH_2CH_2-)_3$$

oder gesättigte Oligomere von Dienen wie Butadien oder Isopren sein.

Bevorzugt als Carbostruktureinheiten G sind solche mit einer Wertigkeit von 3, 4, 5 und 6, besonders bevorzugt sind dreiwertige Carbostruktureinheiten.

Beispiele für Siloxane (1), die bei dem erfindungsgemäßen Verfahren zur Herstellung der Si-gebundenen Wasserstoffatome aufweisenden Organosiliciumverbindungen (B) eingesetzt werden sind

Vinyltris(dimethylsiloxy)silan,
Vinyltris(methylsiloxy)silan,
Vinylmethylbis(dimethylsiloxy)silan,
Vinylmethylbis(methylsiloxy)silan,
Allyltris(methylsiloxy)silan,
5-Hexenyltris(dimethylsiloxy)silan und
7-Octenyltris(methylsiloxy)silan.

Siloxane (1) besitzen vorzugsweise ein Molekulargewicht von 200 bis 400 g/mol und eine Viskosität von vorzugsweise höchstens 10 $mm^2/s$ bei 25°C.

Da die Siloxane (1) über hydrolytische Verfahren aus Silanen und gegebenenfalls Disiloxanen, bevorzugt aus Silanen (4) und Disiloxanen (5), hergestellt werden, ist es möglich, daß sie bis zu ca. 10 Gew.-% Verbindungen der Formel

$$R^1R_xSi(OSiR_{3-a}H_a)_{2-x}\text{-}O\text{-}Si(OSiR_{3-a}H_a)_{2-x}R_xR^1$$

enthalten, also sogenannte Dimere, da 2 T-Einheiten bei x = 0 bzw. 2 D-Einheiten bei x = 1 miteinander kondensiert sind. Eine Verunreinigung der Siloxane (1) mit noch höherem Kondensat in einem geringen Prozentsatz von höchstens 3 Gew.-% ist zwar nicht erwünscht, aber solche Siloxane (1) können in dem erfindungsgemäßen Verfahren zur Herstellung der erfindungsgemäßen Organosiliciumverbindungen (B) eingesetzt werden.

Bei dem erfindungsgemäßen Verfahren zur Herstellung der Siloxane (1) wird vorzugsweise Silan (4) zu einem Gemisch aus Disiloxan (5) und verdünnter Säure, wobei zur Regelung der Säurekonzentration Wasser zugegeben werden kann, zudosiert. Bei der Herstellung der Siloxane (1) beträgt das Verhältnis von Si-Atomen in Disiloxan (5) zu hydrolysefähigen Gruppen Y in Silan (4) vorzugsweise 0,8 bis 2,5, bevorzugt 1,0 bis 1,5.

Gegebenenfalls überschüssiges Disiloxan (5) wird nach der Umsetzung vorzugsweise destillativ entfernt.

Das Verfahren zur Herstellung der Siloxane (1) wird bei einer Temperatur von Vorzugsweise 0°C bis 40°C, bevorzugt 5°C bis 20°C und beim Druck der umgebenden Atmosphäre, also etwa bei 1020 hPa (abs.), durchgeführt. Das Verfahren kann aber auch bei höheren oder niedrigeren Drücken durchgeführt werden.

Beispiele für Silane (4) sind Vinyltrichlorsilan,Allyltrichlorsilan, 5-Hexenyltrichlorsilan, 7-Octenyltrichlorsilan, 9-Decenyltrichlorsilan, Vinylmethyldichlorsilan, 5-Hexenylethyldichlorsilan und 7-Octenylmethyldichlorsilan.

Beispiele für Disiloxane (5) sind 1,1,3,3-Tetramethyldisiloxan, 1,3-Dimethyldisiloxan und 1,3-Diethyldisiloxan.

Beispiele für die Hydrolyse fördernde Katalysatoren (6) sind Säuren, wie Salzsäure, Bromwasserstoffsäure, Schwefelsäure, Perchlorsäure und organische Säuren, wie Trichloressigsäure, Trifluoressigsäure und Trifluormethansulfonsäure, wobei Salzsäure bevorzugt ist. Bevorzugt ist Salzsäure in einer Konzentration von 1 bis 20 %.

Wasser wird bei dem erfindungsgemäßen Verfahren zur Herstellung der Siloxan (1) vorzugsweise in Mengen von 150 bis 300 g je Mol Si-gebundener hydrolysefähiger Gruppe Y in Silan (4) eingesetzt.

Beim Verfahren zur Herstellung der Siloxane (1) können auch inerte Lösungsmitteln, wie Cyclohexan, Toluol, Xylol oder Heptan mitverwendet werden, wobei die Verwendung von Lösungsmitteln nicht bevorzugt ist. Die gegebenenfalls mitverwendeten Lösungsmittel werden nach der Umsetzung vorzugsweise destillativ entfernt.

Die beim erfindungsgemäßen Verfahren zur Herstellung der Si-gebundenen Wasserstoffatome aufweisenden Organosiliciumverbindungen (B) eingesetzten Organosiliciumverbindungen (2) enthalten als bevorzugte Einheiten der Formel (II) solche der Formel $HR_2SiO_{1/2}$ oder $HRSiO_{2/2}$ (R ist bevorzugt ein Methylrest), wobei Einheiten der Formel $HR_2SiO_{1/2}$ besonders bevorzugt sind. Die Organosiliciumverbindungen (2) enthalten vorzugsweise 3 bis 20 Si-gebundene Wasserstoffatome. Bevorzugt sind die Organosiliciumverbindungen (2) frei von aliphatischen Mehrfachbindungen.

Beispiele für Organosiliciumverbindungen (2) sind Phenylsilan, Octylsilan, Dodecylsilan, Methyltris(dimethylsiloxy)silan, Methyltris(diethylsiloxy)silan, Propyltris(dimethylsiloxy)silan, Phenyltris(dimethylsiloxy)silan, Tetrakis(dimethylsiloxysilan), 1,3-Dipropyl-1,1,3,3-tetrakis(dimethylsiloxy)disiloxan und 1,3-Diphenyl-1,1,3,3-tetrakis(dimethylsiloxy)disiloxan.

Weitere Beispiele für Organosiliciumverbindungen (2) sind die in der deutschen Anmeldung mit dem Aktenzeichen 196 02 663.6 der Anmelderin beschriebenen Si-gebundene Wasserstoffatome aufweisenden Organosiliciumverbindungen mit Carbosiloxanstruktur und
Organopolysiloxane der allgemeinen Formel

$$H_cR_{3-c}SiO(R_2SiO)_o(HRSiO)_pSiR_{3-c}H_c$$

wobei R die oben dafür angegebene Bedeutung hat,
c 0 oder 1,
o 0 oder eine ganze Zahl von 1 bis 100, bevorzugt 0 oder eine ganze Zahl von 1 bis 10 und
p 0 oder eine ganze Zahl von 1 bis 50, bevorzugt 0 oder eine ganze Zahl von 1 bis 10 ist.

Bei dem erfindungsgemäßen Verfahren zur Herstellung der Si-gebundenen Wasserstoffatome aufweisenden Organosiliciumverbindung (B) beträgt das Verhältnis von Si-gebundenem Wasserstoff in Organosiliciumverbindung (2) zu aliphatischer Doppelbindung in Siloxan (1) vorzugsweise 1 : 0,5 bis 1 : 20, bevorzugt 1 : 0,5 bis 1 : 10, besonders bevorzugt 1 : 0,5 bis 1 : 5.

Als die Anlagerung von Si-gebundenem Wasserstoff an aliphatische Doppelbindung fördernde Katalysatoren (3) können auch bei dem erfindungsgemäßen Verfahren die gleichen Katalysatoren eingesetzt werden, die auch bisher zur Förderung der Anlagerung von Si-gebundenem Wasserstoff an aliphatische Mehrfachbindung eingesetzt werden konnten. Bei den Katalysatoren (3) handelt es sich vorzugsweise um ein Metall aus der Gruppe der Platinmetalle oder um eine Verbindung oder einen Komplex aus der Gruppe der Platinmetalle. Beispiele für solche Katalysatoren sind metallisches und feinverteiltes Platin, das sich auf Trägern, wie Siliciumdioxyd, Aluminiumoxyd oder Aktivkohle befinden kann, Verbindungen oder Komplexe von Platin, wie Platinhalogenide, z.B. $PtCl_4$, $H_2PtCl_6*6H_2O$, $Na_2PtCl_4*4H_2O$, Platin-Olefin-Komplexe, Platin-Alkohol-Komplexe, Platin-Alkoholat-Komplexe, Platin-Ether-Komplexe, Platin-Aldehyd-Komplexe, Platin-Keton-Komplexe, einschließlich Umsetzungsprodukten aus $H_2PtCl_6*6H_2O$ und Cyclohexanon, Platin-Vinylsiloxankomplexe, wie Platin-1,3-Divinyl-1,1,3,3-tetramethyldisiloxankomplexe mit oder ohne Gehalt an nachweisbarem anorganisch gebundenem Halogen, Bis-(gamma-picolin)-platindichlorid, Trimethylendipyridinplatindichlorid, Dicyclopentadienplatindichlorid, Dimethylsulfoxydethylenplatin-(II)-dichlorid, Cyclooctadien-Platindichlorid, Norbornadien-Platindichlorid, Gamma-picolin-Platindichlorid, Cyclopentadien-Platindichlorid, sowie Umsetzungsprodukte von Platintetrachlorid mit Olefin und primärem Amin oder sekundärem Amin oder primärem und sekundärem Amin gemäß US-A 4,292,434, wie das Umsetzungsprodukt aus in 1-Octen gelöstem Platintetrachlorid mit sec.-Butylamin, oder Ammonium-Platinkomplexe gemäß EP-B 110 370.

Der Katalysator (3) wird beim erfindungsgemäßen Verfahren zur Herstellung der Organosiliciumverbindungen (B) vorzugsweise in Mengen von 1 bis 20 Gew.-ppm (Gewichtsteilen je Million Gewichtsteilen), bevorzugt in Mengen von 2 bis 10 Gew.-ppm, jeweils berechnet als elementares Platin und bezogen auf das Gesamtgewicht von Siloxan (1) und Organosiliciumverbindung (2) verwendet.

Das erfindungsgemäße Verfahren zur Herstellung der Organosiliciumverbindungen (B) wird vorzugsweise beim Druck der umgebenden Atmosphäre, also etwa bei 1020 hPa (abs.), durchgeführt, es kann aber auch bei höheren oder niedrigeren Drücken durchgeführt werden. Ferner wird das erfindungsgemäße Verfahren vorzugsweise bei einer Temperatur von 50°C bis 150°C, bevorzugt 50°C bis 120°C, besonders bevorzugt 80°C bis 120°C durchgeführt.

Bei dem erfindungsgemäßen Verfahren wird Organosiliciumverbindung (2) vorzugsweise vorgelegt, gegebenenfalls zusammen mit einer kleinen Menge von Siloxan (1), worauf der Katalysator (3) zugegeben wird und das Siloxan (1) bei höherer Temperatur zudosiert wird.

Bei dem erfindungsgemäßen Verfahren können inerte, organische Lösungsmittel mitverwendet werden, obwohl die Mitverwendung von inerten, organischen Lösungsmitteln nicht bevorzugt ist. Beispiele für inerte, organische Lösungsmittel sind Toluol, Xylol, Octanisomere, Butylacetat, 1,2-Dimethoxyethan, Tetrahydrofuran und Cyclohexan.

Die gegebenenfalls mitverwendeten inerten organischen Lösungsmittel werden nach der Umsetzung destillativ entfernt.

Das erfindungsgemäße Verfahren zur Herstellung der Organosiliciumverbindung (B) kann absatzweise, halbkontinuierlich oder vollkontinuierlich durchgeführt werden.

Die die erfindungsgemäßen, Si-gebundene Wasserstoffatome aufweisenden Organosiliciumverbindungen (B) enthaltenden vernetzbaren Zusammensetzungen werden vorzugsweise zur Herstellung von klebrige Stoffe abweisenden Überzügen, z.B. zur Herstellung von Trennpapieren, verwendet.

Die Herstellung der mit dem Trennpapier verbundenen Selbstklebematerialien erfolgt nach dem off-line Verfahren oder dem in-line Verfahren. Beim off-line Verfahren wird die Siliconzusammensetzung auf das Papier aufgetragen und vernetzt, dann, in einer darauffolgenden Stufe, gewöhnlich nach dem Aufwickeln des Trennpapiers auf eine Rolle und nach dem Lagern der Rolle, wird ein Klebstoffilm, der beispielsweise auf einem Etikettenfacepapier aufliegt, auf das beschichtete Papier aufgetragen und der Verbund wird dann zusammengepreßt. Beim in-line Verfahren wird die Siliconzusammensetzung auf das Papier aufgetragen und vernetzt, der Siliconüberzug wird mit dem Klebstoff beschichtet, das Etikettenfacepapier wird dann auf den Klebstoff aufgetragen und der Verbund schließlich zusammengepreßt.

Als Bestandteil (A) können auch bei den erfindungsgemäßen Zusammensetzungen die gleichen aliphatische Kohlenstoff-Kohlenstoff-Mehrfachbindungen aufweisenden Organosiliciumverbindungen verwendet werden, die bei allen bisher bekannten vernetzbaren Zusammensetzungen aus aliphatische Kohlenstoff-Kohlenstoff-Mehrfachbindungen aufweisenden Organosiliciumverbindungen, Si-gebundene Wasserstoffatome aufweisenden Organosiliciumverbindungen, die Anlagerung von Si-gebundenem Wasserstoff an aliphatische Mehrfachbindung fördernden Katalysatoren eingesetzt werden konnten.

Bei den erfindungsgemäßen Zusammensetzungen kann eine Art von Bestandteil (A) oder verschiedene Arten von Bestandteil (A) eingesetzt werden.

Als Organosiliciumverbindungen (A), die Reste mit aliphatischen Kohlenstoff-Kohlenstoff-Mehrfachbindungen aufweisen, werden vorzugsweise lineare oder verzweigte Organopolysiloxane aus Einheiten der allgemeinen Formel

$$R^5_e R^6_f SiO_{\frac{4-e-f}{2}} \qquad (V)$$

wobei $R^5$ einen einwertigen von aliphatischen Kohlenstoff-Kohlenstoff-Mehrfachbindungen freien Kohlenwasserstoffrest mit 1 bis 18 Kohlenstoffatomen je Rest und
$R^6$ einen einwertigen Kohlenwasserstoffrest mit mindestens einer terminalen aliphatischen Kohlenstoff-Kohlenstoff-Mehrfachbindung mit 2 bis 12 Kohlenstoffatomen je Rest bedeutet,
e 0, 1, 2 oder 3,
f 0, 1 oder 2
und die Summe e+f 0, 1, 2 oder 3 ist,
mit der Maßgabe, daß durchschnittlich mindestens 1 Rest $R^6$ je Molekül, bevorzugt mindestens 1,5 Reste $R^6$ je Molekül, besonders bevorzugt mindestens 2 Reste $R^6$ je Molekül vorliegen, verwendet.

Bevorzugt als Organosiliciumverbindungen (A) sind Organopolysiloxane der allgemeinen Formel

$$R^6_g R^5_{3-g} SiO(SiR^5_2O)_n(SiR^5R^6O)_m SiR^5_{3-g} R^6_g \qquad (VI)$$

wobei $R^5$ und $R^6$ die oben dafür angegebene Bedeutung haben,
g gleich oder verschieden 0, 1 oder 2,
n 0 oder eine ganze Zahl von 1 bis 1500 und
m 0 oder eine ganze Zahl von 1 bis 200 ist,
mit der Maßgabe, daß durchschnittlich mindestens ein Rest $R^6$ je Molekül, insbesondere mindestens 1,5 Reste $R^6$ je Molekül, besonders bevorzugt mindestens 2 Reste $R^6$ je Molekül, enthalten sind.

Im Rahmen dieser Erfindung soll Formel (VI) so verstanden werden, daß n Einheiten $-(SiR^5_2O)-$ und m Einheiten $-(SiR^5R^6O)-$ in beliebiger Weise im Organopolysiloxanmolekül verteilt sein können.

Als Organosiliciumverbindungen (A) können auch Alkenylgruppen aufweisende Siloxancopolymere, wie sie in US-A 5,241,034 beschrieben sind und die aus Siloxanblöcken und Kohlenwasserstoffblöcken bestehen, verwendet werden. Die in der US-A 5,241,034 beschriebenen Alkenylgruppen aufweisenden Siloxancopolymere gehören daher zum Inhalt der Offenbarung der Anmeldung.

Als Organosiliciumverbindungen (A) können auch aliphatisch ungesättigte Kohlenwasserstoffreste aufweisende Organopolysiloxane, wie sie in der deutschen Patentanmeldung 196 27 022.7 der Anmelderin beschrieben sind, verwendet werden. Die in 196 27 022.7 beschriebenen Organopolysiloxane enthalten trifunktionelle (T) und/oder tetrafunktionelle (Q) Einheiten mit ungesättigten Kohlenwasserstoffresten. Die in 196 27 022.7 beschriebenen Organopolysiloxane gehören daher zum Inhalt der Offenbarung der Anmeldung.

Die Organosiliciumverbindungen (A) besitzen vorzugsweise eine durchschnittliche Viskosität von 100 bis 100 000 mPa • s bei 25°C, bevorzugt 100 bis 10 000 mPa • s bei 25°C, besonders bevorzugt 100 bis 500 mPa.s bei 25°C.

Beispiele für Kohlenwasserstoffreste $R^5$ sind Alkylreste, wie der Methyl-, Ethyl-, n-Propyl-, iso-Propyl-, n-Butyl-, iso-Butyl-, tert.- Butyl-, n-Pentyl-, iso-Pentyl-, neo-Pentyl-, tert.-Pentylrest; Hexylreste, wie der n-Hexylrest; Heptylreste, wie der n-Heptylrest; Octylreste, wie der n-Octylrest und iso-Octylreste, wie der 2,2,4-Trimethylpentylrest; Nonylreste, wie der n-Nonylrest; Decylreste, wie der n-Decylrest, Dodecylreste, wie der n-Dodecylrest; Octadecylreste, wie der n-Octadecylrest; Cycloalkylreste, wie Cyclopentyl-, Cyclohexyl-, Cycloheptylreste und Methylcyclohexylreste; Arylreste, wie der Phenyl-, Naphthyl-, Anthryl- und Phenanthrylrest; Alkarylreste, wie o-, m-, p-Tolylreste, Xylylreste und Ethylphenylreste; und Aralkylreste, wie der Benzylrest, der α- und der β-Phenylethylrest.

Beispiele für Reste $R^6$ sind Alkenylreste, wie der Vinyl-, 5-Hexenyl-, 2,4-Divinylcyclohexylethyl-, 3,4-Divinylcyclohexylethyl-, 2-Propenyl-, 3-Butenyl- und 4-Pentenylrest; und Alkinylreste, wie der Ethinyl- und 2-Propinylrest.

Die erfindungsgemäßen, Si-gebundene Wasserstoffatome aufweisenden Organosiliciumverbindungen (B) können in den bekannten vernetzbaren Zusammensetzungen aus

(A) Organosiliciumverbindungen, die Reste mit aliphatischen Kohlenstoff-Kohlenstoff-Mehrfachbindungen aufweisen,

(B) Si-gebundene Wasserstoffatome aufweisende Organosiliciumverbindungen und

(C) die Anlagerung von Si-gebundenen Wasserstoff an aliphatische Mehrfachbindung fördernde Katalysatoren

die Si-gebundenen Wasserstoffatome aufweisenden Organosiliciumverbindungen (B) ganz oder teilweise ersetzen. Die erfindungsgemäßen vernetzbaren Zusammensetzungen können daher als Bestandteil (B) neben den erfindungsgemäßen Organosiliciumverbindungen (B) auch andere bekannte Si-gebundene Wasserstoffatome aufweisende Organosiliciumverbindungen enthalten.

Als andere Si-gebundene Wasserstoffatome aufweisende Organosiliciumverbindung können daher vorzugsweise Organopolysiloxane aus Einheiten der Formel

$$H_kR_lSiO_{\frac{4-(k+l)}{2}} ,$$

wobei R die oben dafür angegebene Bedeutung hat,
k 0 oder 1,
l 0, 1, 2 oder 3 und
die Summe k+l nicht größer als 3 ist,
bevorzugt solche der Formel

$$H_yR_{3-y}SiO(SiR_2O)_o(SiRHO)_pSiR_{3-y}H_y$$

wobei R die oben dafür angegebene Bedeutung hat,
y O oder 1
o O oder eine ganze Zahl von 1 bis 100 und
p O oder eine ganze Zahl von 1 bis 100 ist,

mitverwendet werden.

Beispiele für solche Organopolysiloxane sind insbesondere Mischpolymerisate aus Dimethylhydrogensiloxan-, Methylhydrogensiloxan-, Dimethylsiloxan- und Trimethylsiloxaneinheiten, Mischpolymerisate aus Trimethylsiloxan-, Dimethylhydrogensiloxan- und Methylhydrogensiloxaneinheiten, Mischpolymerisate aus Trimethylsiloxan-, Dimethylsiloxan- und Methylhydrogensiloxaneinheiten, Mischpolymerisate aus Methylhydrogensiloxan- und Trimethylsiloxaneinheiten, Mischpolymerisate aus Methylhydrogensiloxan-, Diphenylsiloxan- und Trimethylsiloxaneinheiten, Mischpolymerisate aus Methylhydrogensiloxan-, Dimethylhydrogensiloxan- und Diphenylsiloxaneinheiten, Mischpolymerisate aus Methylhydrogen-siloxan-, Phenylmethylsiloxan-, Trimethylsiloxan- und/oder Dimethylhydrogensiloxaneinheiten, Mischpolymerisate aus Methylhydrogensiloxan-, Dimethylsiloxan-, Diphenylsiloxan-, Trimethylsiloxan- und/oder Dimethylhydrogensiloxaneinheiten sowie Mischpolymerisate aus Dimethylhydrogensiloxan-, Trimethylsiloxan-, Phenylhydrogensiloxan-, Dimethylsiloxan- und/oder Phenylmethylsiloxaneinheiten.

Bestandteil (B) wird vorzugsweise in Mengen von 0,8 bis 5,0, bevorzugt 0,8 bis 2,5, besonders bevorzugt 1,0 bis 2,0 Grammatom Si-gebundenen Wasserstoff je Mol Si-gebundenen Restes mit aliphatischer Kohlenstoff-Kohlenstoff Mehrfachbindung im Bestandteil (A) eingesetzt.

Als die Anlagerung von Si-gebundenem Wasserstoff an aliphatische Doppelbindung förderndem Katalysator (C) können auch bei den erfindungsgemäßen Zusammensetzungen die gleichen Katalysatoren verwendet werden, die auch bei den bisher bekannten Zusammensetzungen zum Vernetzen von aliphatische Mehrfachbindungen enthaltenden Organosiliciumverbindungen mit Verbindungen, die Si-gebundenen Wasserstoff enthalten, zur Förderung der Vernetzung eingesetzt werden konnten. Als Bestandteil (C) werden vorzugsweise die oben genannten Katalysatoren (3) verwendet.

Katalysator (C) wird vorzugsweise in Mengen von 5 bis 500 Gewichts-ppm (Gewichtsteilen je Million Gewichtsteilen), insbesondere 10 bis 200 Gewichts-ppm, jeweils berechnet als elementares Platinmetall und bezogen auf das Gesamtgewicht der Organosiliciumverbindungen (A) und (B) eingesetzt.

Beispiele für weitere Bestandteile, die bei den erfindungsgemäßen Zusammensetzungen mitverwendet werden können, sind die Anlagerung von Si-gebundenem Wasserstoff an aliphatische Mehrfachbindung bei Raumtemperatur verzögernde Mittel, sogenannte Inhibitoren (D), Mittel zur Einstellung der Trennkraft, Lösungsmittel, Haftvermittler und Pigmente.

Als Inhibitoren (D) können auch bei den erfindungsgemäßen Zusammensetzungen alle Inhibitoren verwendet werden, die auch bisher für den gleichen Zweck verwendet werden konnten. Beispiele für Inhibitoren sind 1,3-Divinyl-1,1,3,3-tetramethyldisiloxan, Benzotriazol, Dialkylformamide, Alkylthioharnstoffe, Methylethylketoxim, organische oder siliciumorganische Verbindungen mit einem Siedepunkt von mindestens 25°C bei 1012 mbar (abs.) und mindestens

einer aliphatischen Dreifachbindung gemäß US-A 3,445,420, wie 1-Ethinylcyclohexan-1-ol, 2-Methyl-3-butin-2-ol, 3-Methyl-1-pentin-3-ol, 2,5-Dimethyl-3-hexin-2,5-diol und 3,5-Dimethyl-1-hexin-3-ol, 3,7-Dimethyl-oct-1-in-6-en-3-ol Inhibitoren gemäß US-A 2,476,166, wie eine Mischung aus Diallylmaleinat und Vinylacetat, und Inhibitoren gemäß US 4,504,645, wie Maleinsäuremonoester, und Inhibitoren gemäß der deutschen Anmeldung der Anmelderin mit dem Aktenzeichen 19541451.9, wie die Verbindung der Formel HC=C-C($CH_3$)(OH)-$CH_2$-$CH_2$-CH=C($CH_3$)$_2$, käuflich erwerblich unter dem Handelsnamen "Dehydrolinalool" bei der Fa. BASF.

Vorzugsweise wird der Inhibitor (D) in Mengen von 0,01 bis 10 Gew.-%, bezogen auf das Gesamtgewicht der Organosiliciumverbindungen (A) und (B), eingesetzt.

Beispiele für Mittel zur Einstellung der Trennkraft der mit den erfindungsgemäßen Zusammensetzungen hergestellten klebrige Stoffe abweisenden Überzüge sind Siliconharze aus Einheiten der Formel

$$R^7(CH_3)_2SiO_{1/2} \text{ und } SiO_2 ,$$

sogenannte MQ-Harze, wobei $R^7$ ein Wasserstoffatom, ein Methylrest, ein Vinylrest oder ein Rest A, der in der oben zitierten US-A 5,241,034 beschrieben ist und daher zum Inhalt der Offenbarung der Anmeldung gehört, ist, und die Einheiten der Formel $R^7(CH_3)_2SiO_{1/2}$ gleich oder verschieden sein können. Das Verhältnis von Einheiten der Formel $R^7(CH_3)_2SiO_{1/2}$ zu Einheiten der Formel $SiO_2$ beträgt vorzugsweise 0,6 bis 2. Die Siliconharze werden vorzugsweise in Mengen von 5 bis 80 Gew.-%, bezogen auf das Gesamtgewicht der Organosiliciumverbindungen (A) und (B), eingesetzt.

Die bei den erfindungsgemäßen Zusammensetzungen gegebenenfalls mitverwendeten Lösungsmittel können die gleichen Lösungsmittel sein, die bei den bisher bekannten Zusammensetzungen aus Si-gebundene Vinylgruppen ausweisenden Organopolysiloxanen, Si-gebundenen Wasserstoff aufweisenden Organopolysiloxanen und die Anlagerung von Si-gebundenem Wasserstoff an aliphatische Doppelbindung förderndem Katalysator verwendet werden konnten. Beispiele für solche Lösungsmittel sind Benzine, z. B. Alkangemische mit einem Siedebereich von 80°C bis 110°C bei 1012 mbar (abs.), n-Heptan, Benzol, Toluol und Xylole, halogenierte Alkane mit 1 bis 6 Kohlenstoffatomen, wie Methylenchlorid, Trichlorethylen und Perchlorethylen, Ether, wie Di-n-butylether, Ester, wie Ethylacetat, und Ketone, wie Methylethylketon und Cyclohexanon.

Werden organische Lösungsmittel mitverwendet, so werden sie zweckmäßig in Mengen von 10 bis 95 Gew.-%, bezogen auf das Gewicht der Organosiliciumverbindungen (A), eingesetzt.

Die Reihenfolge beim Vermischen der Bestandteile (A), (B), (C) und gegebenenfalls (D) ist zwar nicht entscheidend, für die Praxis hat es sich jedoch bewährt, den Bestandteil (C), also den Katalysator, dem Gemisch der anderen Bestandteile zuletzt zuzusetzen.

Die Vernetzung der erfindungsgemäßen Zusammensetzungen erfolgt vorzugsweise bei 50°C bis 150°C, bevorzugt 70°C bis 120°C. Ein Vorteil bei den erfindungsgemäßen Zusammensetzungen ist, daß eine rasche Vernetzung schon bei niedrigen Temperaturen erzielt wird. Als Energiequellen für die Vernetzung durch Erwärmen werden vorzugsweise Öfen, z.B. Umlufttrockenschränke, Heizkanäle, beheizte Walzen, beheizte Platten oder Wärmestrahlen des Infrarotbereiches verwendet.

Die erfindungsgemäßen Zusammensetzungen können außer durch Erwärmen auch durch Bestrahlen mit Ultraviolettlicht oder durch Bestrahlen mit UV- und IR-Licht vernetzt werden. Als Ultraviolettlicht wird üblicherweise solches mit einer Wellenlänge von 253,7 nm verwendet. Im Handel gibt es eine Vielzahl von Lampen, die Ultraviolettlicht mit einer Wellenlänge von 200 bis 400 nm aussenden, und die Ultraviolettlicht mit einer Wellenlänge von 253,7 nm bevorzugt emittieren.

Das Auftragen von den erfindungsgemäßen Zusammensetzungen auf die klebrige Stoffe abweisend zu machenden Oberflächen kann in beliebiger, für die Herstellung von Überzügen aus flüssigen Stoffen geeigneter und vielfach bekannter Weise erfolgen, beispielsweise durch Tauchen, Streichen, Gießen, Sprühen, Aufwalzen, Drucken, z. B. mittels einer Offsetgravur-Überzugsvorrichtung, Messer- oder Rakel-Beschichtung oder mittels einer Luftbürste.

Bei den klebrige Stoffe abweisend zu machenden Oberflächen, die im Rahmen der Erfindung behandelt werden können, kann es sich um Oberflächen beliebiger bei Raumtemperatur und 1012 mbar (abs.) fester Stoffe handeln. Beispiele für derartige Oberflächen sind diejenigen von Papier, Holz, Kork und Kunststoffolien, z. B. Polyethylenfolien oder Polypropylenfolien, gewebtem und ungewebtem Tuch aus natürlichen oder synthetischen Fasern oder Glasfasern, keramischen Gegenständen, Glas, Metallen, mit Polyethylen beschichtetem Papier und von Pappen, einschließlich solcher aus Asbest. Bei dem vorstehend erwähnten Polyethylen kann es sich jeweils um Hoch-, Mittel- oder Niederdruck-Polyethylen handeln. Bei Papier kann es sich um minderwertige Papiersorten, wie saugfähige Papiere, einschließlich rohem, d. h. nicht mit Chemikalien und/oder polymeren Naturstoffen vorbehandeltes Kraftpapier mit einem Gewicht von 60 bis 150 g/m$^2$, ungeleimte Papiere, Papiere mit niedrigem Mahlgrad, holzhaltige Papiere, nicht satinierte oder nicht kalandrierte Papiere, Papiere, die durch die Verwendung eines Trockenglättzylinders bei ihrer Herstellung ohne weitere aufwendigen Maßnahmen auf einer Seite glatt sind und deshalb als "einseitig maschinenglatte Papiere" bezeichnet werden, unbeschichtete Papiere oder aus Papierabfällen hergestellte Papiere, also um sogenannte Abfallpapiere, handeln. Bei dem erfindungsgemäß zu behandelnden Papier kann es sich aber auch selbstverständlich um hochwertige Papiersorten, wie saugarme Papiere, geleimte Papiere, Papiere mit hohem Mahlgrad, holzfreie Papiere, kalandrierte oder satinierte Papiere, Pergaminpapiere, pergamentisierte Papiere oder vorbeschichtete Papiere, handeln. Auch die Pappen können hoch- oder minderwertig sein.

Die erfindungsgemäßen Zusammensetzungen eignen sich beispielsweise zum Herstellen von Trenn-, Abdeck-, und Mitläuferpapieren, einschließlich Mitläuferpapieren, die bei der Herstellung von z. B. Gieß- oder Dekorfolien oder von Schaumstoffen, einschließlich solcher aus Polyurethan, eingesetzt werden. Die erfindungsgemäßen Zusammensetzungen eignen sich weiterhin beispielsweise zur Herstellung von
Trenn-, Abdeck-, und Mitläuferpappen, -folien, und -tüchern, für die Ausrüstung der Rückseiten von selbstklebenden Bändern oder selbstklebenden Folien oder der beschrifteten Seiten von selbstklebenden Etiketten. Die erfindungsgemäßen Zusammensetzungen eignen sich auch für die Ausrüstung von Verpackungsmaterial, wie solchem aus Papier, Pappschachteln, Metallfolien und Fässern, z. B. Pappe, Kunstoff, Holz oder Eisen, das bzw. die für Lagerung und/oder Transport von klebrigen Gütern, wie Klebstoffen, klebrigen Lebensmitteln, z. B. Kuchen, Honig, Bonbons und Fleisch, Bitumen, Asphalt, gefetteten Materialien und Rohgummi, bestimmt ist bzw. sind. Ein weiteres Beispiel für die Anwendung der erfindungsgemäßen Zusammensetzungen ist die Ausrüstung von Trägern zum Übertragen von Haftklebeschichten beim sogenannten "Transfer-Verfahren".

Die erfindungsgemäßen Zusammensetzungen eignen sich zur Herstellung der mit dem Trennpapier verbundenen Selbstklebematerialien sowohl nach dem off-line Verfahren als auch nach dem in-line Verfahren.

**Beispiel 1:** Herstellung von Vinyltris(dimethylsiloxy)silan

858 g 1,1,3,3-Tetramethyldisiloxan werden mit ca. 100 g 5 %iger HCl-Lösung turbolent gerührt und auf ca. + 10 °C gekühlt. Bei gleicher Temperatur dosiert man über einen Zeitraum von ca. 3 Stunden 565 g Vinyltrichlorsilan und rund 2 l Wasser zu. Es wird weitere 10 Minuten gerührt, die HCl-Phase danach abgetrennt. Mit 3 x 600 ml Wasser wird annähernd neutral gewaschen, der Restgehalt an Säure durch Phosphatpuffer (pH 7,0) entfernt. Der geringe Überschuß an Disiloxan wird ausdestilliert. Vinyltris(dimethylsiloxy)silan wird im Vakuum (ca. 70 - 75 °C/24 hPa) von höheren Kondensaten abgetrennt. Man erhält 833 g $ViSi(OSiMe_2H)_3$ in fast 99 % Reinheit, was einer Ausbeute von 85 % der Theorie entspricht. Aufgrund der hohen Reaktivität sind Katalysatoren für Hydrosilylierungsreaktionen absolut fern zu halten.

**Beispiel 2:** Herstellung von 5-Hexenyltris(dimethylsiloxy)silan

Die Arbeitsweise von Beispiel 1 wird wiederholt mit der Abänderung, daß anstelle von Vinyltrichlorsilan 242 g 5-Hexenyltrichlorsilan und 242 g anstelle von 858 g 1,1,3,3-Tetramethyldisiloxan eingesetzt werden. Nach der Destillation bei 105 - 110 °C/9 hPa werden 297 g (89 % d. Th.) 5-Hexenyltris(dimethylsiloxy)silan erhalten.

**Beispiel 3:**

Bei 25 °C werden 29,6 Propyltris(dimethylsiloxy)silan mit 8,4 g Vinyltris(dimethylsiloxy)silan, dessen Herstellung in Beispiel 1 beschreiben ist, gemischt und 45 mg einer 1 %igen (bezogen auf Platinmetall) Lösung eines Platin-1,3-Divinyl-1,1,3,3-tetramethyldisiloxan-Komplexes in $\alpha,\omega$-Divinyldimethylpolysiloxan des sogenannten Karstedt-Katalysators, der im folgenden dem Katalysator entspricht, wie er nach US-A 3,775,452 hergestellt wird, zugegeben. Das Gemisch wird auf ca. 100 °C erwärmt, worauf man über ca. 4 Stunden weitere 75,6 g Vinyltri(dimethylsiloxy)silan über 100 °C zudosiert. Nach Abkühlung auf 25 °C erhält man ein stark verzweigtes Siloxan der Viskosität 13,2 $mm^2/s$ bei 25°C mit durchschnittlich 9 $HMe_2SiO$-Gruppen pro Molekül. Weder im $^1H$-NMR-noch im $^{29}Si$-NMR-Spektrum sind $H_2C{=}CH{-}Si$-Gruppen nachzuweisen. Das Produkt erhält 7,9 g Si-gebundenen Wasserstoff pro kg.

**Beispiel 4:**

Beispiel 3 wird mit der insgesamt doppelten Menge Vinyltris(dimethylsiloxy)silan wiederholt. Die Viskosität des Dendrimers beträgt nun 26,2 $mm^2/s$ bei 25°C, wobei es 7,6 g Si-gebundenen Wasserstoff pro kg und durchschnittlich 15 $HMe_2SiO$-Gruppen pro Molekül enthält.

**Beispiel 5:**

Beispiel 3 wird statt mit Propyltris(dimethylsiloxy)silan mit 11,5 g eines Siloxans der durchschnittlichen Formel $Me_3SiO(HMeSiO)_3SiMe_3$ wiederholt. Man erhält ein Produkt einer Viskosität von 55,4 $mm^2/s$ bei 25°C. Pro kg enthält es 7,3 g Si-gebundenen Wasserstoff bzw. durchschnittlich 21 SiH-Gruppen pro Molekül.

**Beispiel 6:**

In gleicher Weise wie in Beispiel 3 wird Vinyltris(dimethylsiloxy)silan in gleichen Mengen mit 26,7 g 1,2-Bis[tris(dimethylsiloxy)silanyl]ethan umgesetzt. Das hoch verzweigte Carbosiloxan mit einer Viskosität von 29,4 $mm^2/s$ bei 25°C enthält 8,1 g Si-gebundenen Wasserstoff pro kg. Das durchschnittliche Molekül enthält ca. 18 SiH-Gruppen.

**Beispiel 7:**

37,0 g 1,2,4-Tris[2-[tris(dimethylsiloxy)silanyl]ethyl]cyclohexan (Stereoisomerengemisch) werden mit 40 mg einer 1 %igen (bezogen auf Platinmetall) Lösung von Karstedt-Katalysator in Siliconöl, sowie mit 6,6 g Vinyltris(dimethylsiloxy)silan vermischt und unter Stickstoffatmosphäre langsam erwärmt. Bei ca. 100 °C dosiert man über einen Zeitraum von 2 Stunden insgesamt 60,6 g Vinyltris(dimethylsiloxy)silan zu. Man erhält ein stark verzweigtes Siloxan mit durchschnittlich 21 Hydrogendimethylsiloxygruppen pro Molekül und einer Viskosität von 73 $mm^2/s$ bei 25°C.

**Beispiel 8:**

Beispiel 7 wird mit der 2,5-fachen Menge an Vinyltris(dimethylsiloxy)silan wiederholt. Man erhält ein Carbosiloxanpolymer mit Dendrimerstruktur mit einer Viskosität von 128 $mm^2/s$ bei 25°C. Die Dichte an SiH-Funktionen beträgt ca. 7,6 Mol/kg.

**Vergleichsversuch 1:**

25 g Vinyltris(dimethylsiloxy)silan werden bei 25 °C mit 10 mg der Katalysatorlösung aus Beispiel 3 vermischt und ohne Organosiliciumverbindung (2) langsam erwärmt. Ab ca. 50 °C setzt eine stark exotherme, nicht mehr kontrollierbare Reaktion ein, die zur teilweisen Verdampfung des Kolbeninhalts führt. Unter teilweiser Zersetzung des Produkts werden Temperaturen über 200 °C erreicht, was ein erhebliches Gefahrenpotential darstellt. Zielviskositäten und Polymerisationsgrad sind nicht steuerbar.

**Beispiel 9 und Vergleichsversuch 2:**

Es werden folgende Formulierungen bereitet:

| | Beispiel 9 | | Vergleichsversuch 2 | |
|---|---|---|---|---|
| | g | mequ | g | mequ |
| α,ω-Divinyl-PDMS | 40,00 | 10,80 | 40,00 | 10,80 |
| Dehydrolinalool | 0,09 | 0,60 | 0,09 | 0,60 |
| Carbosiloxanvernetzer 7 | 0,68 | 5,40 | -- | -- |
| Vernetzer $B^2$ | 0,70 | 10,80 | 1,05 | 16,20 |
| Platinkatalysator | 0,41 | | 0,41 | |

Das α,ω-Divinyldimethylpolysiloxan (= α,ω-Divinyl-PDMS) hat eine durchschnittliche Kettenlänge von ca. 100 Si-Atomen.

Dehydrolinalool ist erhältlich bei Fa. BASF und hat ein Molekulargewicht von 152.

Als Carbosiloxanvernetzer 7 wird das Si-gebundene Wasserstoffatome aufweisende Siloxan verwendet, dessen Herstellung in Beispiel 7 beschrieben ist.

Vernetzer $B^2$ ist ein Polymerisat aus Hydrogenmethylsiloxaneinheiten mit Trimethylsilylendgruppen und ca. 15,4 Si-H-Gruppen/kg.

Der Platinkatalysator besteht aus Karstedt-Katalysator gelöst in α,ω-Divinyl-dimethylpolysiloxan mit 10 g Pt (berechnet als Pt-Metall) pro kg Katalysatorlösung.

Die Konzentration an Si-gebundenen Wasserstoff beträgt in jeder Formulierung das 1,5-fache der C=C-Doppelbindung. Alle Formulierungen werden nach Auftrag auf superkalandriertem Papier in ca. 4 μm Schichtstärke im Umluftofen bei 90°C ausgehärtet bzw. bei 80°C (isotherm) ein DSC (Differential Scanning Colorimetry)-Spektrum aufgenommen.

| | Beispiel 9 | Vergleichsversuch 2 |
|---|---|---|
| Aushärtung bei 90°C: | | |
| strichfrei | 6 | > 20 |
| (Zeit in sek.) abriebfest | 6 | 20 |
| DSC-Peak nach Sekunden | 340 | > 1200 |
| Gelzeit (25°C) | >76 h | > 76 h |

Bei vergleichbaren Gelzeiten härtet die erfindungsgemäße Formulierung unter Verarbeitungsbedingungen weit schneller als die Vergleichsformulierung.

**<u>Beispiel 10 und Vergleichsversuch 3:</u>**

Die Formulierungen für Beispiel 10 und Vergleichsversuch 3 werden hergestellt, indem die Formulierungen gemäß Beispiel 9 sowie Vergleichsversuch 2 zubereitet werden, mit der Abänderung, daß die 90 mg Dehydrolinalool jeweils durch 70 mg 1-Ethinylcyclohexanol ersetzt werden. Die jeweils ca. 50-fachen Ansätze werden im Vergleich auf einer Beschichtungsmaschine getestet. Die Länge des Trockenofens beträgt 4,5 m. Die Umlufttemperatur 150°C. Beschichtet wird superkalandriertes Papier "Rhiliner 12" (Firma Rhinelander / USA) in ca. 0,9 mm Schichtstärke. Sofort nach Aushärtung werden die unvernetzten (extrahierbaren) Anteile durch mehrtätgige Extraktion durch MIBK (= Methylisobutylketon) bestimmt und mit der jeweiligen Bahngeschwindigkeit korreliert.

| | % Extraktanteile | |
|---|---|---|
| Bahngeschwindigkeit [m/min] | Beispiel 10 | Vergleichsversuch 3 |
| 100 (2,70)* | 3,3 | 7,8 |
| 150 (1,80)* | 6,4 | 16,2 |
| 200 (1,35)* | 12,0 | nicht gehärtet |
| 250 (1,08)* | nicht gehärtet | nicht gehärtet |

*) Verweilzeit im Ofen in Sekunden

Die erfindungsgemäße Formulierung ist unter gleichen Bedingungen weitaus besser gehärtet (geringerer Extraktanteil). Ein akzeptables Limit von 5% extrahierbarem Anteil wird unter gegebenen Bedingungen von üblicher Rezeptur bereits bei 65 m/min erreicht, wogegen die erfindungsgemäße Rezeptur schneller als 100 m/min gefahren werden kann.

## Patentansprüche

**1.** Vernetzbare Zusammensetzungen enthaltend

(A) Organosiliciumverbindungen, die Reste mit aliphatischen Kohlenstoff-Kohlenstoff-Mehrfachbindungen aufweisen
(B) Si-gebundene Wasserstoffatome aufweisende Organosiliciumverbindungen
(C) die Anlagerung von Si-gebundenem Wasserstoff an aliphatische Mehrfachbindung fördernde Katalysatoren und gegebenenfalls
(D) die Anlagerung von Si-gebundenem Wasserstoff an aliphatische Mehrfachbindung bei Raumtemperatur verzögernde Mittel,

dadurch gekennzeichnet, daß als (B) Si-gebundene Wasserstoffatome aufweisende Organosiliciumverbindungen solche enthaltend

(a) durchschnittlich je Molekül mindestens eine Struktureinheit der allgemeinen Formel

$$-Z-SiR_x(OSiR_{3-a}H_a)_{3-x} \quad (I),$$

wobei R gleich oder verschiedenen ist und einen einwertigen, von aliphatischen Mehrfachbindungen freien, gegebenenfalls halogenierten Kohlenwasserstoffrest mit 1 bis 8 Kohlenstoffatomen je Rest bedeutet,
Z einen zweiwertigen aliphatischen Kohlenwasserstoffrest mit 2 bis 12 Kohlenstoffatomen je Rest bedeutet,
a 1, 2 oder 3 und
x 0 oder 1 ist.

verwendet werden.

2. Vernetzbare Zusammensetzungen enthaltend

(A) Organosiliciumverbindungen, die Reste mit aliphatischen Kohlenstoff-Kohlenstoff-Mehrfachbindungen aufweisen
(B) Si-gebundene Wasserstoffatome aufweisende Organosiliciumverbindungen
(C) die Anlagerung von Si-gebundenem Wasserstoff an aliphatische Mehrfachbindung fördernde Katalysatoren und gegebenenfalls
(D) die Anlagerung von Si-gebundenem Wasserstoff an aliphatische Mehrfachbindung bei Raumtemperatur verzögernde Mittel,

dadurch gekennzeichnet, daß als (B) Si-gebundene Wasserstoffatome aufweisende Organosiliciumverbindungen solche herstellbar indem
Siloxane (1) der allgemeinen Formel

$$R^1SiR_x(OSiR_{3-a}H_a)_{3-x}$$

wobei R gleich oder verschiedenen ist und einen einwertigen, von aliphatischen Mehrfachbindungen freien, gegebenenfalls halogenierten Kohlenwasserstoffrest mit 1 bis 8 Kohlenstoffatomen je Rest bedeutet,
$R^1$ einen einwertigen aliphatischen Kohlenwasserstoffrest mit einer endständigen aliphatischen Doppelbindung mit 2 bis 12 Kohlenstoffatomen je Rest bedeutet,
a 1, 2 oder 3 ist und
x 0 oder 1 ist,
mit Organosiliciumverbindungen (2), die durchschnittlich je Molekül mindestens ein Si-gebundenes Wasserstoffatom enthalten,
in Gegenwart von die Anlagerung von Si-gebundenem Wasserstoff an aliphatische Mehrfachbindung fördernde Katalysatoren (3) umgesetzt werden,
wobei das eingesetzte Verhältnis von Si-gebundenem Wasserstoff in Organosiliciumverbindung (2) zu aliphatischer Doppelbindung in Siloxan (1) 1 : 0,1 bis 1 : 20 beträgt, verwendet werden.

3. Verwendung der vernetzbaren Zusammensetzungen nach Anspruch 1 oder 2, zur Herstellung von klebrige Stoffe abweisenden Überzügen.

4. Si-gebundene Wasserstoffatome aufweisende Organosiliciumverbindungen (B) enthaltend

(a) durchschnittlich je Molekül mindestens eine Struktureinheit der allgemeinen Formel

$$-Z-SiR_x(OSiR_{3-a}H_a)_{3-x} \quad (I),$$

wobei R gleich oder verschiedenen ist und einen einwertigen, von aliphatischen Mehrfachbindungen freien, gegebenenfalls halogenierten Kohlenwasserstoffrest mit 1 bis 8 Kohlenstoffatomen je Rest bedeutet,
Z einen zweiwertigen aliphatischen Kohlenwasserstoffrest mit 2 bis 12 Kohlenstoffatomen je Rest bedeutet,
a 1, 2 oder 3 und

x 0 oder 1 ist.

5. Verfahren zur Herstellung der Si-gebundene Wasserstoffatome aufweisenden Organosiliciumverbindungen (B) nach Anspruch 4, dadurch gekennzeichnet, daß Siloxane (1) der allgemeinen Formel

$$R^1SiR_x(OSiR_{3-a}H_a)_{3-x}$$

wobei R gleich oder verschiedenen ist und einen einwertigen, von aliphatischen Mehrfachbindungen freien, gegebenenfalls halogenierten Kohlenwasserstoffrest mit 1 bis 8 Kohlenstoffatomen je Rest bedeutet,
$R^1$ einen einwertigen aliphatischen Kohlenwasserstoffrest mit einer endständigen aliphatischen Doppelbindung mit 2 bis 12 Kohlenstoffatomen je Rest bedeutet,
a 1, 2 oder 3 ist und
x 0 oder 1 ist,
mit Organosiliciumverbindungen (2), die durchschnittlich je Molekül mindestens ein Si-gebundenes Wasserstoffatom enthalten,
in Gegenwart von die Anlagerung von Si-gebundenem Wasserstoff an aliphatische Mehrfachbindung fördernde Katalysatoren (3) umgesetzt werden,
wobei das eingesetzte Verhältnis von Si-gebundenem Wasserstoff in Organosiliciumverbindung (2) zu aliphatischer Doppelbindung in Siloxan (1) 1 : 0,1 bis 1 : 20 beträgt.

6. Verfahren nach Anspruch 5, dadurch gekennzeichnet, daß als Siloxane (1) Vinyltris(dimethylsiloxy)silan eingesetzt wird.

7. Verfahren nach Anspruch 5, dadurch gekennzeichnet, daß als Siloxane (1) der allgemeinen Formel

$$R^1SiR_x(OSiR_{3-a}H_a)_{3-x}$$

wobei R gleich oder verschiedenen ist und einen einwertigen, von aliphatischen Mehrfachbindungen freien, gegebenenfalls halogenierten Kohlenwasserstoffrest mit 1 bis 8 Kohlenstoffatomen je Rest bedeutet,
$R^1$ einen einwertigen aliphatischen Kohlenwasserstoffrest mit einer endständigen aliphatischen Doppelbindung mit 2 bis 12 Kohlenstoffatomen je Rest bedeutet,
a 1, 2 oder 3 ist und
x 0 oder 1 ist,
solche eingesetzt werden, die durch Umsetzung von Silanen (4) der allgemeinen Formel

$$R^1R_xSiY_{3-x}$$

mit Disiloxanen (5) der allgemeinen Formel

$$(H_aR_{3-a}Si)_2O$$

wobei Y gleich oder verschieden sein kann, ein Halogenatom oder ein Rest der Formel $-OR^2$ ist, wobei $R^2$ einen Alkylrest mit 1 bis 8 Kohlenstoffatomen je Rest, der durch ein Ethersauerstoffatom substituiert sein kann, bedeutet,
und R, $R^1$, a und x die oben dafür angegebene Bedeutung haben,
und Wasser in Gegenwart von die Hydrolyse fördernde Katalysatoren (6),
wobei das eingesetzte Verhältnis von Si-Atomen in Disiloxan (5) zu hydrolysefähigen Gruppen Y in Silan (4) 0,8 bis 5,0 beträgt.

Europäisches Patentamt

# EUROPÄISCHER RECHERCHENBERICHT

Nummer der Anmeldung
EP 97 11 5805

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int.Cl.6) |
|---|---|---|---|
| X | PATENT ABSTRACTS OF JAPAN<br>vol. 018, no. 385 (C-1227), 20.Juli 1994<br>& JP 06 107949 A (SHIN ETSU CHEM CO LTD), 19.April 1994,<br>* Zusammenfassung *<br>--- | 1-4 | C08L83/07<br>C09D183/07<br>C08G77/50 |
| X | PATENT ABSTRACTS OF JAPAN<br>vol. 018, no. 385 (C-1227), 20.Juli 1994<br>& JP 06 107671 A (SHIN ETSU CHEM CO LTD), 19.April 1994,<br>* Zusammenfassung *<br>--- | 1-4 | |
| P,X | EP 0 786 463 A (WACKER CHEMIE GMBH)<br>* Ansprüche 1-7 *<br>--- | 1 | |
| X | EP 0 694 573 A (DOW CORNING TORAY SILICONE)<br>* Ansprüche 1-3,5-12 *<br>* Seite 2, Zeile 25 - Zeile 30 *<br>--- | 1 | |
| X | CHEMICAL ABSTRACTS, vol. 122, no. 6, 6.Februar 1995<br>Columbus, Ohio, US;<br>abstract no. 56637,<br>RUBINSZTAJIN , S.: "synthesis and characterization of new poly(siloxysilanes)"<br>XP002047244<br>&<br>J.INORG.ORGANOMET. POLYM.,<br>Bd. 4, Nr. 1, 1994,<br>Seiten 61-77,<br>--- | 4-7 | **RECHERCHIERTE SACHGEBIETE (Int.Cl.6)**<br>C08L<br>C09D<br>C08G<br>C08K |
| A | EP 0 367 222 A (WACKER CHEMIE GMBH)<br>* Anspruch 1 *<br>* Seite 3, Zeile 8 *<br>* Seite 9; Beispiel 9 *<br>----- | 1 | |

Der vorliegende Recherchenbericht wurde für alle Patentansprüche erstellt

| Recherchenort | Abschlußdatum der Recherche | Prüfer |
|---|---|---|
| DEN HAAG | 18.November 1997 | Depijper, R |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument

& : Mitglied der gleichen Patentfamilie,übereinstimmendes Dokument

EPO FORM 1503 03.82 (P04C03)